# EUROPEAN PATENT SPECIFICATION

(11) **EP 1 671 852 B1**
(45) Date of publication and mention of the grant of the patent: **13.02.2008**
(21) Application number: 05026772.3
(22) Date of filing: 07.12.2005
(51) Int. Cl.: B60R 21/16

(54) **Airbag and airbag system**
Airbag und Airbag-System
Sac gonflable et système de sac gonflable

(30) Priority: 16.12.2004 JP 2004364751
(43) Date of publication of application: 21.06.2006
(73) Proprietor: TAKATA CORPORATION, Minato-ku, Tokyo 106-8510 (JP)
(72) Inventor: Kumagai, Masayoshi, Minato-ku Tokyo 106-8510 (JP)
(74) Representative: Vossius & Partner

(56) References cited:
- EP-A- 1 364 838
- EP-A- 1 452 403
- US-A1- 2004 160 048
- US-A1- 2004 232 681

## Description

The present invention relates to an airbag for protecting an occupant in a car crash and so on, and in particular, it relates to an airbag, a popularly called a twin airbag, including a left airbag section and a right airbag section that inflates on the left side and right side in front of an occupant, respectively. The invention also relates to an airbag system including the airbags.

US 2004/0160048 relates to an airbag device comprising an airbag and an inflator for inflating the airbag, wherein the inflator disposed at the base side of the airbag ejects gas to inflate the airbag such that a distal end of the airbag moves away from the base side of the airbag. The airbag includes a left half airbag to be inflated at a front left side of a vehicle occupant and a right half airbag to be inflated at the front right side of the occupant. Distal ends of the left and right half airbags are separated by a space facing the occupants when the airbag is inflated. The left and right half airbags have primary folded portions having vertically elongated folded states and secondary folded portions having vertically folded states to form the final defolded state.

JP-A-4-292239 discloses an airbag for protecting an occupant in a car crash and so on, which includes a left airbag section and a right airbag section that are inflated on the left side and right side in front of an occupant, respectively, by a common inflator. In the airbag of the reference, the.distal ends of the left airbag section and the right airbag section are joined together with a tie panel.

The airbag is housed in a casing in a folded condition and covered with a cover. When an inflator (gas generator) is activated to emit a jet of gas in a car crash, the airbag pushes the cover open to inflate toward the front of an occupant.

However, in the airbag disclosed in JP-A-4-292239, when the left airbag section and the right airbag section inflate, the gas from the inflator flows more into one of the airbag sections than the other, so that the other airbag section might inflate later than one airbag section.

In order to solve the problems and to thereby inflate then left airbag section and the right airbag section substantially in synchronism, a twin airbag has been developed recently which is improved to connect the midpoints in the sides in which the left airbag section and the right airbag section are facing each other in the direction of the inflation.

When such an airbag inflates, the left airbag section receives the left chest of the occupant and the right airbags section receives the right chest. The left and right chests have hard and strong ribs. The airbag receives and absorbs the impact on the occupant via the ribs. With the airbag in an inflated state, a space is produced between the distal ends of the right airbag section and the left airbag section. The breastbone in the center of the breast of the occupant faces the space. Accordingly, when the body of the occupant strikes against the airbag, the breastbone receives little reaction force from the airbag, thus decreasing the load on vicinity of the breastbone.

The left airbag section and the right airbag section are joined together at the midpoints of the parts in which the left airbag section and the right airbag section are facing each other in the direction of the inflation. Accordingly, even if one of the airbag sections inflates later than the other, the first inflating airbag section may draw the late inflating airbag section to accelerate its inflation. Moreover, the first inflating airbag starts to draw the late inflating airbag in the direction of the inflation at the initial stage when the first airbag inflates to the midpoints. Thus, both of the left airbag section and the right airbag section inflate smoothly and substantially symmetrically evenly from the initial stage of the inflation.

In this improved twin airbag, the left airbag section and the right airbag section are joined together with a joining member such as a tie belt, or the left airbag section and the right airbag section are each provided with a tongue and the airbag sections are joined together by stitching the tongues, thus having the disadvantages of requiring much time and labor for stitching, or increasing the volume of the stitched portion.

Accordingly, it is an object of the present invention to provide a twin airbag and an airbag system in which the left airbag section and the right airbag section are joined together at the middle points in the direction of the inflation, whereby inflating smoothly and substantially symmetrically evenly from the initial stage of the inflation, wherein the midpoints of the left and right airbag sections can be easily joined together and also an increase in volume of the joined portion is prevented.

An airbag according to the invention (Claim 1) is an airbag that is inflated in the direction in which the distal end moves away from the base end, with gas emitted from an inflator disposed on the base end thereof. The airbag includes a left airbag section that is inflated toward the left front of an occupant; and a right airbag section that is inflated toward the right front of the occupant. The left airbag section and the right airbag section connect with each other at the base ends and are inflated by a common inflator. The airbag is provided with a vent hole on the side opposite to the facing side of the left airbag section and the right airbag section. The vent holes are disposed at the position at which they coincide with each other when the left airbag section and the right airbag section in an uninflated state are flattened and the respective facing sides are put one on top the other. Of the facing parts of the left airbag section and the right airbag section, at least the portions that coincide with the vent holes are put one on the other and stitched together, whereby the midpoints of the facing parts of the left airbag section and the right airbag section in the direction of inflation are joined together.

The airbag according to Claim 1 is characterized in that the joined portions of the facing sides of the left airbag section and the right airbag section each have a patch. (Corresponding to Claim 2)

The airbag according to Claim 1 or 2 is characterized in that the joined portions of the facing sides of the left airbag section and the right airbag section are stitched together with a ring-shaped seam; and an opening is provided inside the ring-shaped seam, through which the left airbag section and the right airbag section communicate with each other. (Corresponding to Claim 3)

An airbag system according to the invention (Claim 4) includes the airbag according to the invention and an inflator for inflating the airbag

The airbag and the airbag system according to the invention require no belt and tongue for joining the left airbag section and the right airbag section because the midpoints of the facing sides of the airbag sections in the direction of the inflation are put one on the other and stitched together. Thus the volume of the joined portions of the airbag sections is small.

The stitching of the airbag sections can be made through the vent holes of the airbag sections on a sewing machine, thus facilitating stitching work. Application of a patch to the stitched portions increases stitching strength.

When the stitch is a ring-shaped seam, the inside of which is opened, through which the airbag sections are communicated with each other, the inner pressure of the airbag sections can be made even.

The present invention is described in detail below based on embodiments with reference to the attached drawings:
Fig. 1 is a schematic diagram of an airbag according to an embodiment of the invention;
Fig. 2 is a cross sectional view of the airbag, taken along line II-II of Fig. 1;
Fig. 3 is a cross-sectional view of the joint structure of the airbag of Fig. 1;
Fig. 4 is a cross-sectional view of the joint structure of an airbag according to another embodiment;
Fig. 5 is a cross-sectional view of the joint structure of an airbag according to yet another embodiment;
Fig. 6 is an exploded perspective view of the airbag of Fig. 5;
Fig. 7 is a perspective view of the airbag in Fig. 5;
Fig. 8 is diagram showing the joint structure of an airbag according to still another embodiment; and
Fig. 9 is a cross-sectional view of the joint structure of an airbag according to further another embodiment.

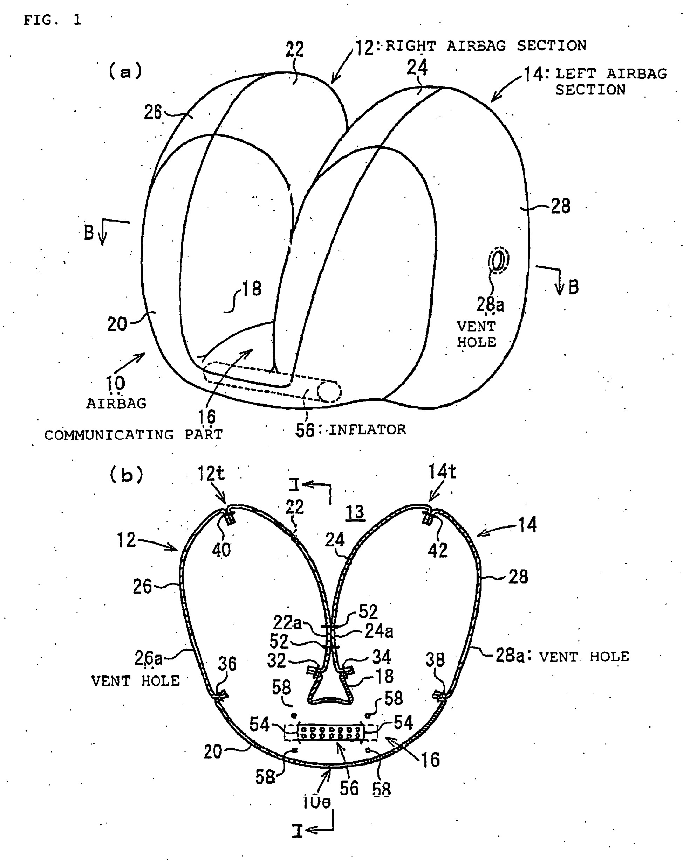

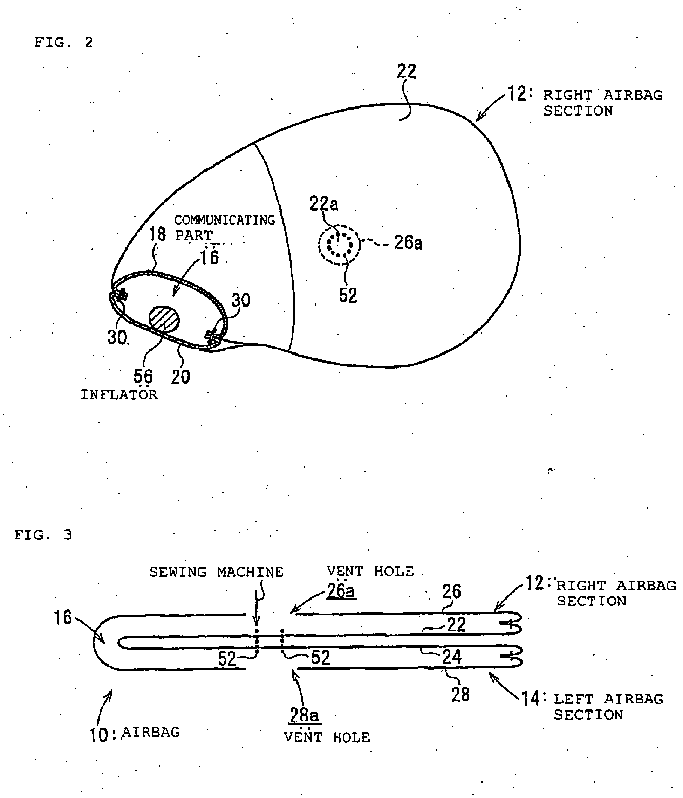

Fig. 1(a) is a perspective view of an airbag according to an embodiment of the present invention, in an inflated state; Fig. 1(b) is a sectional view of the airbag, taken along line B-B of Fig. 1(a). Fig. 2 is a sectional view of the airbag, taken along line II-II of Fig. 1(b). Fig. 3 is a cross-sectional view of the airbag, showing how the facing-side panels of the left airbag section and the right airbag section are stitched together. Fig. 3 shows the panel structure of the airbag in a simplified manner.

The airbag 10 includes a right airbag section 12 that inflates in the right front of an occupant, a left airbag section 14 that inflates in the left front of the occupant, and a communicating part 16 that communicates the ends of the right airbag section 12 and the left airbag section 14 with each other. The communicating part 16 constructs the base end of the airbag 10. Accordingly, the right airbag section 12 and the left airbag section 14 inflate in the direction remote from the communicating part 16.

In this embodiment, with the airbag 10 in an inflated state, a space 13 is produced between the distal ends of the right airbag section 12 and the left airbag section 14 . The space 13 is open to the occupant (upward in Fig. 1(b)).

With the airbag 10 in a fully inflated state, it is preferable that the space between the endmost 12t of the right airbag section 12 and the endmost 14t of the left airbag section 14 be from 150 to 350 mm long, particularly, from 170 to 330 mm long.

In the airbag 10, the midpoint of the right airbag section 12 in the direction of inflation and the midpoint of the left airbag section 14 in the direction of inflation are joined together with a seam 52

In this embodiment, the airbag 10 is constructed of panels 18, 20, 22, 24, 26, and 28 stitched up together. The stitch structure of the panels will be specifically described below.

The panel 18 (rear inner panel) constructs the center-side surface of the right airbag section 12 and the left airbag section 14 adjacent to the rear ends relative to the midpoints in the direction of inflation and the center-side surface of the communicating part 16. The panel 20 (rear outer panel) constructs the surface (the outer side of the airbag) opposite to the rear inner panel 18.

The panels 22 and 24 (front inner panels) construct the center-side surfaces (the facing surfaces of the right airbag section 12 and the left airbag section 14) of the right airbag section 12 and the left airbag section 14 adjacent to the distal ends relative to the midpoints in the direction of inflation.

. The panels 26 and 28 (front outer panels) construct the surfaces (the outer surfaces of the airbag) opposite to the front.inner panels 22 and24.

Reference numeral 30 denotes a seam (sewing thread) that stitches up the rear inner panel 18 and the rear outer panel 20 together. Reference numerals 32 and 34 denote seams that sew the rear inner panel 18 and the front inner panels 22 and 24 together, respectively. Reference numerals 36 and 38 denote seams that sew the rear outer panel 20 and the front outer panels 26 and 28 together, respectively

The front outer panels 26 and 28 have vent holes 26a and 28a, respectively. The vent holes 26a and 28a are disposed in a position at which they coincide with each other when the right airbag section 12 and the left airbag section 14 are flattened such that the panels 26, 22, 24, and 28 are piled up

The joined portion of the facing surfaces of the right airbag section 12 and the left airbag section 14 with the seam 52 is formed such that the parts 22a and 24a of the panels 22 and 24 which coincide with the vent holes 26a and 28a (at least partly exposed parts), when the right airbag section 12 and the left airbag section 14 are flattened as described above, are piled up and stitched together. The stitching is made through the vent holes 26a and 28a on a sewing machine, as shown in Fig. 3.

It is preferable that the distance from the rear end 10e of the inflated airbag to the seam 52 be from 30 to 70% of the longitudinal length L of the inflated airbag 10, particularly, from 40 to 55%

The rear outer panel 20 that constructs the outer surface of the communicating part 16 has a pair of slits 54 for an inflator to pass through. In this embodiment, a rod like inflator 56 is used as shown in Figs. 1(a) and 1(b). The rod-like inflator 56 is inserted into the slits 54 such that it passes through the communicating part 16 along the width of the vehicle. The both ends of the inflator 56 are disposed outside the airbag 10.

The airbag 10 is mounted to an airbag system for protecting an occupant in a car collision. The airbag system has a box-shaped casing with no lid (not shown) for accommodating the airbag 10. The airbag 10 connects to the casing. Reference numeral 58 in Fig. 1(b) indicates an insertion hole for a fastening means (not shown), such as a bolt, to join the airbag 10 with the casing. The both ends of the inflator 56 are also fixed to the casing.

The airbag system is constructed in such a way that the airbag 10 is accommodated in the casing in a folded state and a cover (not shown), such as a lid, is mounted on the casing so as to cover the folded airbag 10. The lid is cleaved by the pressure from the airbag 10 upon inflation.

The airbag system is mounted to, for example, an instrument panel ahead of the passenger seat of a car. In a car crash, the inflator 56 emits a jet of gas into the communicating part 16. The gas from the inflator 56 flows through the communicating part 16 into the right airbag section 12 and the left airbag section 14, with which the right airbag section 12 and the left airbag section 14 are inflated in the right and left front of the occupant respectively.

In the airbag 10, when one of the right airbag section 12 and the left airbag section 14 inflates first from the folded state in the casing, and the other inflates later, the first inflating airbag section may draw the late inflating airbag section to accelerate its inflation because the right airbag section 12 and the left airbag section 14 are joined together. Moreover, the first inflating airbag starts to draw the late inflating airbag in the direction of inflation at the relatively initial stage after starting the inflation because the midpoints of the right airbag section 12 and the left airbag section 14 in the direction of inflation are joined together with the seam 52. Thus, both of the right airbag section 12 and the left airbag section 14 inflate smoothly and substantially symmetrically evenly from the initial stage of inflation.

With the airbag 10 in a fully inflated state, the space 13 is produced between the distal ends of the right airbag section 12 and the left airbag section 14, the space 13 being open to the occupant. The inflated right airbag section 12 receives the right chest of the occupant; the inflated left airbag section 14 receives the left chest. The breastbone faces the space 13. Accordingly, the reaction applied to the vicinity of the breastbone when the airbag receives the occupant can be low.

In the airbag 10, the right airbag section 12 and the left airbag section 14 are joined together such that the facing panels, 22 and 24, are put one upon the other and stitched together. This requires no belt or tongue or the like for the joining. Thus the volume of the joined portion of the right airbag section 12 and the left airbag section 14 can be small.

The stitching of the panels 22 and 24 can be made through the vent holes 26a and 28a in the panels 26 and 28 piled on the outside thereof on a sewing machine and as such, the stitching work is easy.

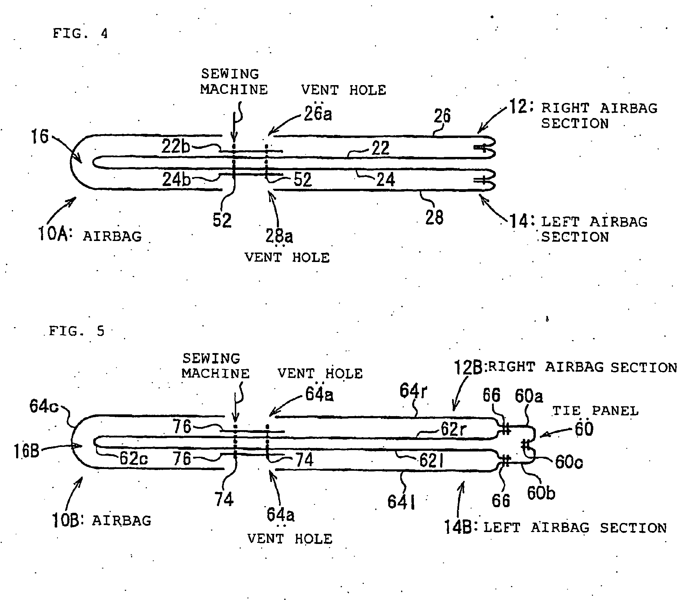

The invention may have a reinforcing patch on the facing-side stitching portion of the right airbag section 12 and the left airbag section 14. Fig. 4 is a cross-sectional view of an airbag 10A with such a structure, showing how the facing surfaces of the right airbag section 12 and the left airbag section 14 are stitched together. Fig. 4 also shows the panel structure of the airbag 10A in a simplified manner, as in Fig. 3.

In the airbag 10A, the portions (portions to be stitched) that coincide with the vent holes 26a and 28a of the front inner panels 22 and 24, when the right airbag section 12 and the left airbag section 14 are flattened such that the panels 26, 22, 24 and 28 are put one on another, have patches 22b and 24b at the interior of the airbag sections 12 and 14. The patches 22b and 24b may be temporarily bonded to the portions to be stitched by sewing or bonding or the like.

The panels 22 and 24 are stitched together such that the portions to be stitched are put one on another and sewn up together with the patches 22b and 24b on a sewing machine through the vent holes 26a and 28a.

Backing the patches 22b and 24b on the stitching portions of the panels 22 and 24 increases the stitching strength

The other structure of the airbag 10A is the same as that of the airbag 10 in Figs. 1 to 3.

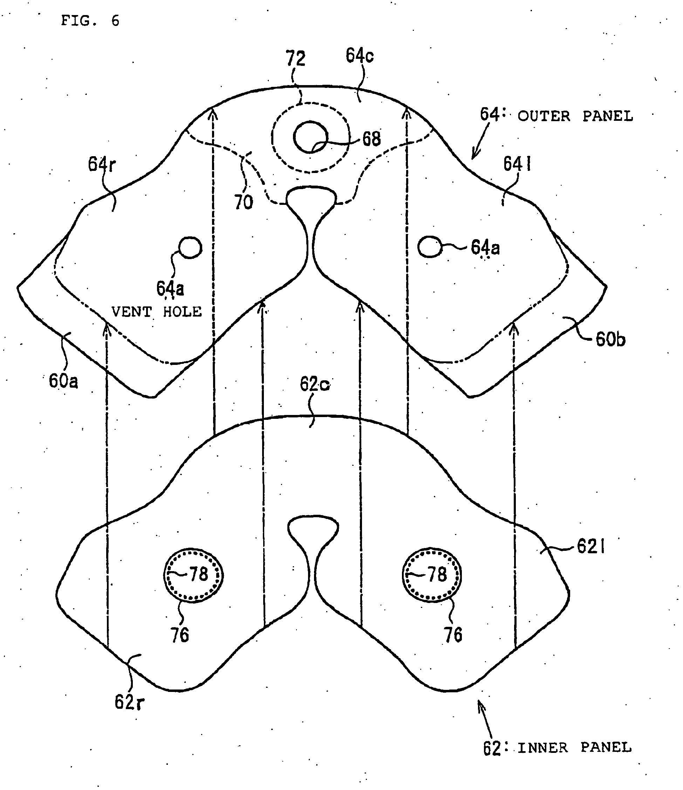

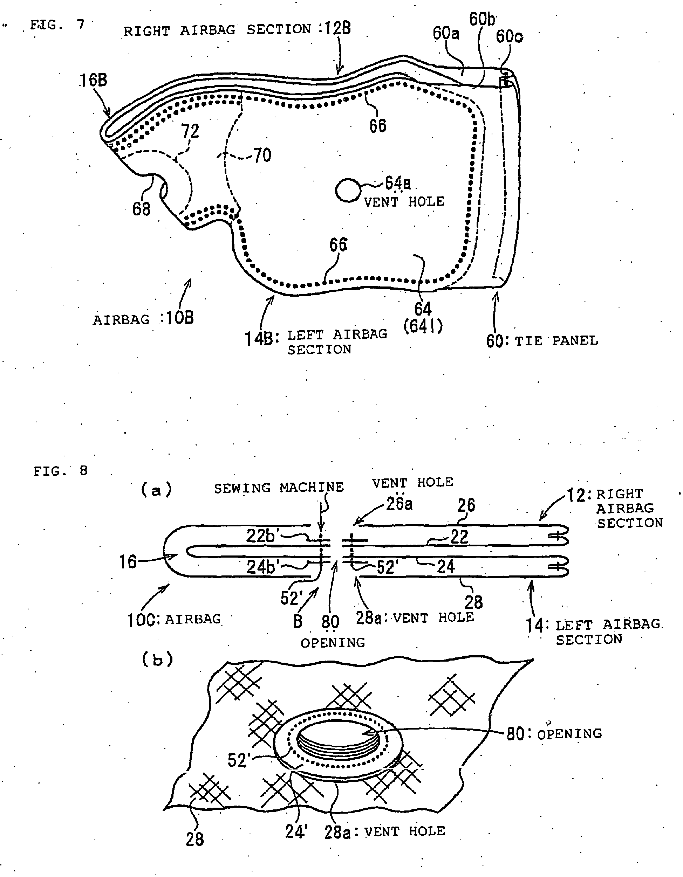

Fig. 5 is a cross-sectional view of an airbag 10B according to yet the other embodiment, showing how the facing surfaces of a right airbag section 12B and a left airbag section 14B are stitched together. Fig. 6 is an exploded perspective view of the airbag 10B, showing the panel structure thereof. Fig. 7 shows the airbag 10B in a flattened state in perspective view.

The airbag 10B includes a right airbag section 12B that inflates in the right front of an occupant, a left airbag section 14B that inflates in the left front of the occupant, a communicating part 16B that communicates the ends (base ends) of the right airbag section 12B and.the left airbag section 14B, and a tie panel 60 that connects the distal ends in the.direction of inflation of the right airbag section 12B and the left airbag section 14B.

In this embodiment, the airbag 10B is constructed such that a panel 62 (an inner panel) that constructs a contiguous surface in the center-side airbag of the right airbag section 12B, the left airbag section 14B, and the communicating part 16B, and a panel 64 (an outer panel) that constructs a contiguous surface in outer airbag of the right airbag section 12B, the left airbag section 14B, and the communicating part 16B are stitched together. Reference numeral 66 denotes a seam that stitches up the peripheries of the panels 62 and 64 together.

Specifically, the inner panel 62 includes a right panel section 62r that constructs the center-side surface of the right airbag section 12B, a left panel section 621 that constructs the center-side surface of the left airbag section 14B, and a communicating panel section 62c that connects them. The outer panel 64 includes a right panel section 64r that constructs the outer-side surface of the right airbag section 12B, a left panel section 641 that constructs the outer-side surface of the left airbag section 14B, and a communicating panel section 64c that connects them

The communicating panel section 64c of the outer panel 64 has an inflator opening 68. Inside the communicating panel section 64c is provided a fire-proofing cloth 70. Around the inflator opening 68 is provided a reinforcing cloth 72.

The right panel section 64r and the left panel section 641 of the outer panel 64 each have a vent hole 64a. The vent holes 64a are disposed in the position in which they are put one on the other when the right airbag section 12B and the left airbag section 14B of the airbag 10B are flattened such that the panels 64r, 62r, 621, and 641 are put one on another.

The tie panel 60 is composed of panel sections 60a and 60b extending from the distal ends of the right airbag section 12B and the left airbag section 14B, respectively. In this embodiment, the panel sections 60a and 60b extend from the front rims of the right panel section 64r and the left panel section 641 of the outer panel 64 (side rims extending vertically from the distal ends of the right airbag section 12B and the left airbag section 14B in the product of the airbag 10B) and are integrated with the panel sections 64r and 641, respectively.

The distal ends of the right airbag section 12B and the left airbag section 14B are joined together by stitching up the distal ends of the panel sections 60a and 60b in the extending direction from the panel sections 64r and 641. Reference numeral 60c denotes a seam for the stitching.

Also in the airbag 10B, the midpoints of the right airbag section 12B and the left airbag section 14B in the direction of inflation are joined together with a seam 74. The joined portion is formed such that the facing panel sections 62r and 621 of the right airbag section 12B and the left airbag section 14B are put one on the other and sewn up through the vent holes 64a on a sewing machine.

Also in this embodiment, the stitched portions of the panel sections 62r and 621 each have a reinforcing patch 76. Reference numeral 78 indicates a seam that stitched the patch 76 on the panel sections 62r and 621 in advance.

Also the airbag 10B with such a structure offers the same advantages as those of the airbag 10 in Figs. 1 to 3 and the airbag 10A in Fig. 4. However, with the airbag 10B, upon completion of inflation, the distal ends of the right airbag section 12B and the left airbag section 14B face the shoulders of the occupant and the tie panel 60 that connects them faces the chest of the occupant.

When an occupant strikes against the airbag 10B, the distal ends of the right airbag section 12B and the left airbag section 14B receive the shoulders of the occupant and the tie panel 60 receives the chest and head of the occupant. When the chest and head of the occupant strike against the tie panel 60, the tie panel 60 is elastically moved backward to receive the chest and head of the occupant relatively softly.

Fig. 8(a) is a cross-sectional view of an airbag 10C according to still other embodiment, showing how the right airbag section 12 and the left airbag section 14 are stitched together. Fig. 8(b) is an enlarged perspective view of part B in Fig. 8(a).

The airbag 10C has the same panel structure as that of the airbag 10A of Fig. 4, in which the portions-to-be-stitched of the facing panels 22 and 24 of the right airbag section 12 and the left airbag section 14 have patches 22b' and 24b' backed from the interior of the airbag. The portions to be stitched are sewn up with a seam 52' together with the patches 22b' and 24b'.

In this embodiment, the seam 52' is shaped like a ring, as shown in Fig. 8(b), on the inside of which an opening 80 is provided which passes through the patches 22b' and 24b' and the panels 22 and 24. Accordingly, in the airbag 10C, the right airbag section 12 and the left airbag section 14 communicate with each other through the opening 80. The shape of the opening 80 is not particularly limited.

The other structure of the airbag 10C is the same as that of the airbag 10A in Fig. 4.

In the airbag 10C, the right airbag section 12 and the left airbag section 14 communicate with each other through the opening 60. Accordingly, upon inflation of the airbag 10C, the inner pressures of the airbag sections 12 and 14 are made even.

According to the above-described embodiments, of the facing surfaces of the left airbag section and the right airbag section, only the portions exposed into the vent holes with the right airbag section and the left airbag section flattened are stitched together. Alternatively, also the portions protruding from the vent holes (portions not exposed inside the vent holes) may be stitched.

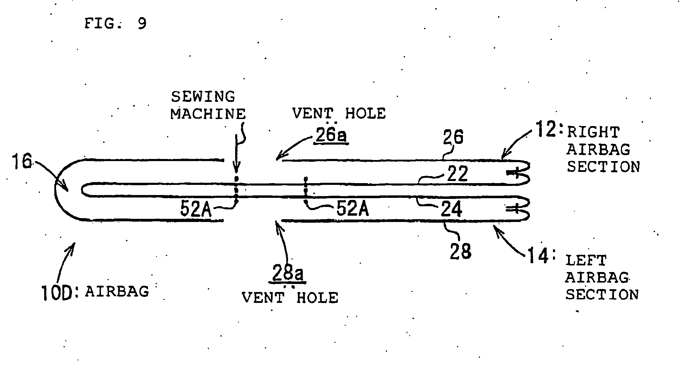

Fig. 9 is a cross-sectional view of an airbag 10D with such a structure, showing how the right airbag section 12 and the left airbag section 14 are stitched together.

The airbag 10D has the same panel structure as that of the airbag 10 in Figs. 1 to 3. In the airbag 10D, of the facing panels 22 and 24 of the right airbag section 12 and the left airbag section 14, the portions exposed inside the vent holes 26a and 28a through the portions protruding from the vent holes 26a and 28a with the right airbag section 12 and the left airbag section 14 flattened are stitched together with a seam 52A. In this embodiment, the seam 52A is shaped like a ring, whose diameter is larger than that of the vent holes 26a and 28a

The panels 22 and 24 are stitched up in such a way that the right airbag section 12 and the left airbag section 14 are first flattened, and the portions of the panels 22 and 24 which are exposed inside the vent holes 26a and 28a are stitched together on a sewing machine through the vent holes 26a and 28a. Then the stitched portion is moved off from the inside of the vent holes 26a and 28a or the peripheries of the vent holes 26a and 28a are torn up to thereby expose the portions protruding from the vent holes 26a and 28a. These portions are also stitched up on a sewing machine through the vent holes 26a and 28a. However, the way of stitching the protruding portions is not limited to that.

Stitching the facing surfaces of the right airbag section and the left airbag section across the wide area reduces the stress applied to the stitched portions when the airbag inflates or the inflated airbag receives the occupant, increasing the durability of the airbag. The larger the stitched region, the greater the advantages are.

While the embodiments in Figs. 1 to 3 use a rod-like inflator, the invention may use another type of inflator, for example, a disc-shaped inflator, called a disc type, which is thicker and shorter than the rod-like inflator-The circular inflator opening 68 provided at the rear end of the airbag 10B in Figs. 5 to 7 is an opening for the disc-type inflator to pass through the airbag 10B.

The above-described embodiments are examples of the invention and it is to be understood that the invention is not limited to the embodiments.

## Claims

1. An airbag that is inflated in the direction in which the distal end moves away from the base end, with gas remitted from an inflator (56) disposed on the base end thereof, the airbag (10;10A;10B;10C;10D) comprising: (14; 14B)
a left airbag section (14;14B) that is inflated toward the left front of an occupant; and
a right airbag section (12;12B) that is inflated toward the right front of the occupant, wherein
the left airbag section (14; 14B) and the right airbag section (12B) connect with each other at the base ends a (16; 16B) and are inflated by a common inflator (56); and
the airbag is provided with a vent hole (26a, 28a; 64a) on the side (26,28;64r,64l) opposite to the facing (22;24;62r,62l) of the left airbag section (14;14B) and the right airbag section (12;12B) wherein
the vent holes (26a, 28a; 64a) are disposed at the position at which they coincide with each other when the left airbag section and the right airbag section (12;12B) in an uninflated state are flattened and the respective facing sides (26,22,24,28;64r,62l,64l) are put one on top the other, and of the facing parts (22,24;62r,62l) of the left airbag section (14;14B) and the right airbag section (12;12B) at least the portions (22a,24a) that coincide with the vent holes (26a,28a;64a) put one on the other and stitched together, whereby the midpoints of the facing parts (22, 24 ; 62r, 62l) of the left airbag section (14; 14B) and the right airbag section (12, 12B) in the direction of inflation are joined together.

2. The airbag according to Claim 1, wherein the joined portions (22a, 24a) of the facing sides (22, 24; 62r, 62l) of the left airbag section (14; 14B) and the right-airbag section (12; 12B) each have a patch (22b, 24b; 76; 22b', 24b'),

3. The airbag according to Claim 1 or 2, wherein:
the joined portions (22a, 24a) of the facing sides (22, 24, 62r, 62l) of the left airbag section (14; 14B) and the right airbag section (12;12B) are stitched together with a ring-shaped seam (52; 74; 52' ;52A); and
an opening (80) is provided inside the ring-shaped seam (52') through which the left airbag section (14) and the right airbag section (12) communicate with each other.

4. An airbag system including an airbag (10; 10A; 10B; 10C; 10D) and an inflator (56) for inflating the airbag, wherein
the airbag is an airbag according to one of Claims 1 to 3.

## Patentansprüche

1. Airbag, der in der Richtung, in welcher sich das distale Ende von dem Basisende weg bewegt, mit Gas aufgeblasen wird, das von einer Aufblaseinrichtung (56) ausgegeben wird, die in-seinem Basisende angeordnet ist, wobei der Airbag (10; 1.OA; lOB; lOC; 10D) aufweist:
einen linken Airbagabschnitt (14; 14B), der zur linken Vorderseite eines Insassen hin aufgeblasen wird; und
einen rechten Airbagabschnitt (12; 12B), der zur rechten Vorderseite eines Insassen hin aufgeblasen wird, wobei
der linke Airbagabschnitt (14; 14B) und der rechte Airbagabschnitt (12; 12B) miteinander an den Basisenden (16; 16B) verbunden sind und durch eine gemeinsame Aufblaseinrichtung (56) aufgeblasen werden; und
der Airbag mit einem Lüftungsloch (26a, 28a; 64a) auf der Seite (26, 28; 64r, 641) versehen ist, die zu der gegenüberliegenden Seite (22, 24; 62r, 621) des linken Airbagabschnitts (14; 14B) und des rechten Airbagabschnitts (12; 12B) entgegengesetzt ist, wobei
die Lüftungslöcher (26a, 28a; 64a) an der Position angeordnet sind, wo sie miteinander übereinstimmen, wenn der linke Airbagabschnitt (14; 14B) und der rechte Airbagabschnitt (12; 12B) in einem nicht aufgeblasenen Zustand zusammengefaltet sind, und die entsprechenden gegenüberliegenden Seiten (26, 22, 24, 28; 64r, 62r, 621, 641) aufeinander gelegt sind, und von den gegenüberliegenden Teilen (22, 24; 62r, 621) des linken Airbagabschnitts (14; 14B) und des rechten Airbagabschnitts (12; 12B) wenigstens die Teilabschnitte (22a, 24a), die mit den Lüftungslöchern (26a, 28a; 64a) übereinstimmen, aufeinander gelegt und miteinander vernäht sind, wodurch die Mittelpunkte der gegenüberliegenden Teile (22, 24; 62r, 621) des linken Airbagabschnitts (14; 14B) und des rechten Airbagabschnitts (12; 12B) in der Aufblasrichtung miteinander verbunden sind.

2. Airbag nach Anspruch 1, wobei die verbundenen Teilabschnitte (22a, 24a) der gegenüberliegenden Seiten (22, 24; 62r, 621) des linken Airbagabschnitts (14; 14B) und des rechten Airbagabschnitts (12; 12B) jeweils einen Flicken (22b, 24b; 76; 22b', 24b') aufweisen.

3. Airbag nach Anspruch 1 oder 2, wobei die verbundenen Teilabschnitte (22a, 24a) der gegenüberliegenden Seiten (22, 24; 62r, 621) des linken Airbagabschnitts (14; 14B) und des rechten Airbagabschnitts (12; 12B) miteinander mit einer ringförmigen Naht (52; 74; 52'; 52A) vernäht sind; und
eine Öffnung (80) innerhalb der ringförmigen Naht (52') vorgesehen ist, durch welche der linke Airbagabschnitt (14) und der rechte Airbagabschnitt (12) miteinander in Verbindung stehen.

4. Airbag-System mit einem Airbag (10; 10A; 10B; 10C; 10D;) und einer Aufblaseinrichtung (56) zum Aufblasen des Airbags, wobei
der Airbag ein Airbag gemäß einem der Ansprüche 1 bis 3 ist.

## Revendications

1. Coussin gonflable qui est gonflé dans la direction dans laquelle l'extrémité distale s'éloigne de l'extrémité de base, avec un gaz émis par un gonfleur (56) disposé sur l'extrémité de base de celui-ci, le coussin gonflable (10 ; 10A ; 10B ; 10C ; 10D) comprenant :
une section de coussin gonflable gauche (14 ; 14B) qui est gonflée vers l'avant gauche d'un passager ; et
une section de coussin gonflable droite (12 ; 12B) qui est gonflée vers l'avant droit d'un passager, dans lequel
la section de coussin gonflable gauche (14 ; 14B) et la section de coussin gonflable droite (12 ; 12B) sont reliées l'une à l'autre au niveau des extrémités de base (16 ; 16B) et sont gonflées par un gonfleur commun (56) ; et
le coussin gonflable est pourvu d'un trou d'aération (26a, 28a ; 64a) sur le côté (26, 28 ; 64r, 641) opposé aux côtés se faisant face (22, 24 ; 62r, 621) de la section de coussin gonflable gauche (14 ; 14B) et de la section de coussin gonflable droite (12 ; 12B), dans lequel
les trous d'aération (26a, 28a ; 64a) sont disposés à l'emplacement auquel ils coïncident l'un avec l'autre lorsque la section de coussin gonflable gauche (14 ; 14B) et la section de coussin gonflable droite (12 ; 12B) dans un état dégonflé sont aplaties et les côtés se faisant face respectifs (26, 22, 24, 28, 64r, 62r, 621, 641) sont disposés l'un sur l'autre, et des parties se faisant face (22, 24 ; 62r, 621) de la section de coussin gonflable gauche (14 ; 14B) et de la section de coussin gonflable droite (12 ; 12B), au moins les parties (22a, 24a) qui coïncident avec les trous d'aération (26a, 28a ; 64a) sont mises l'une sur l'autre et cousues ensemble, les points milieux des parties se faisant face (22, 24; 62r, 621) de la section de coussin gonflable gauche (14; 14B) et de la section de coussin gonflable droite (12 ; 12B) dans le sens du gonflement sont assemblés.

2. Coussin gonflable selon la revendication 1, dans lequel les parties assemblées (22a, 24a) des côtés se faisant face (22, 24 ; 62r, 621) de la section de coussin gonflable gauche (14 ; 14B) et de la section de coussin gonflable droite (12 ; 12B) présentent chacune un renfort (22b, 24b; 76 ; 22b', 24b').

3. Coussin gonflable selon la revendication 1 ou 2, dans lequel :
les parties assemblées (22a, 24a) des côtés se faisant face (22, 24 ; 62r, 621) de la section de coussin gonflable gauche (14 ; 14B) et de la section de coussin gonflable droite (12 ; 12B) sont cousues ensemble avec une couture annulaire (52 ; 74 ; 52' ; 52A) ; et
une ouverture (80) est prévue à l'intérieur de la couture annulaire (52'), à travers laquelle la section de coussin gonflable gauche (14) et la section de coussin gonflable droite (12) communiquent l'une avec l'autre.

4. Système de coussin gonflable comprenant un coussin gonflable (10 ; 10A ; 10B ; 10C ; 10D) et un gonfleur (56) pour gonfler le coussin gonflable, dans lequel le coussin gonflable est le coussin gonflable selon l'une des revendications 1 à 3.
